# EUROPÄISCHE PATENTANMELDUNG

(11) **EP 1 149 733 A2**
(43) Veröffentlichungstag der Anmeldung: **31.10.2001**
(21) Anmeldenummer: 01109568.4
(22) Anmeldetag: 18.04.2001
(51) Int. Cl.: B60Q 3/02

(54) **Leuchte für ein Land-, Wasser-oder Luftfahrzeug, insbesondere ein Wohnmobil**

(30) Priorität: 27.04.2000 DE 20007591 U
(71) Anmelder: Hymer AG, 88339 Bad Waldsee (DE)
(72) Erfinder: Buck, Rainer, 88239 Wangen (DE)
(74) Vertreter: Riebling, Peter, Dr.-Ing.

(57) **Zusammenfassung**

Leuchte für ein Land-, Wasser- oder Luftfahrzeug, insbesondere ein Wohnmobil mit einem langgestreckten Leuchtengehäuse, einem darin angeordneten Leuchtmittel und mindestens einer teilweise lichtdurchlässigen Leuchtenabdeckung, wobei die Leuchte als stehende Standleuchte (40a) ausgebildet ist, welche mindestens eine Möbelwand (1 oder 2) in vertikaler Richtung durchbricht und sowohl an der Vorderseite als auch an der Rückseite die teilweise lichtdurchlässige Leuchtenabdeckung (16,17) trägt.

## Beschreibung

Die Erfindung betrifft eine Leuchte für ein Land-,Wasser- oder Luftfahrzeug, insbesondere ein Wohnmobil nach dem Oberbegriff des Patentanspruchs 1.

Der einfachheithalber wird in der folgenden Beschreibung lediglich die Verwendung einer Leuchte für ein Wohnmobil angegeben, obwohl sie allgemein für jegliche Land-, Wasser- oder Luftfahrzeuge verwendet werden kann.

In einer sich bekannter Weise besteht die Leuchte aus einem langgestreckten Leuchtengehäuse, einem darin angeordneten Leuchtmittel und mindestens einer teilweise lichtdurchlässigen Leuchtenabdeckung. Derartige Leuchten werden in vielfältigen Ausführungsformen in Wohnmobilen verwendet und in der Regel als Deckenleuchten ausgebildet. Das Leuchtmittel ist hierbei entweder eine Leuchtstoffröhre oder eine Sparlampe oder auch eine Sofitte.

Wegen den beengten Raumverhältnisse in derartigen Wohnmobilen besteht das Bedürfnis, mit einer einzigen Leuchte zwei unterschiedliche Räume zu beleuchten. Bisher ist es nicht bekannt, eine Leuchte zur Beleuchtung von zwei unterschiedlichen Räumen zu verwenden.

Zur Erfindung liegt deshalb die Aufgabe zugrunde die eingangs genannte Leuchte so auszubilden, dass sie zur gleichzeitigen Beleuchtung von zwei aneinander anstoßenden Räumen geeignet ist.

Zur Lösung der gestellten Aufgabe sieht die Erfindung nach einem ersten Erfindungsgedanken vor, dass die Leuchte als stehende Standeckleuchte ausgebildet ist, welche zumindestens eine Möbelwand in vertikaler Richtung durchbricht und sowohl an der Vorderseite als auch an der Rückseite die teilweise lichtdurchlässige Leuchtenabdeckung trägt.

Der Erfindungsgedanke liegt also darin, dass man die Verbindungswand zwischen zwei aneinander anstoßenden Räumen durchbricht und in diese Verbindungswand die Leuchte der Gestalt einsetzt, dass sie sowohl eine vorderseitige, lichtdurchlässige Leuchtenabdeckung als auch eine rückseitige, lichtdurchlässige Leuchtenabdeckung trägt, so dass die Leuchte bei Einschalten des Leuchtmittels sowohl über die vordere Leuchtenabdeckung als auch über die hintere Leuchtenabdeckung Licht in die jeweils aneinander anstoßenden Räume abgibt.

Hierbei sieht die Erfindung in einer ersten Ausführungsform vor, dass die genannte Leuchte als Standleuchte ausgebildet ist, welche direkt aneinander anstoßende Trennwände zwischen unterschiedlichen Räumen im Bereich außerhalb einer Eckverbindung durchbricht und damit beide Räume beleuchtet.

In einer zweiten Ausführungsform sieht die Erfindung vor, dass die Standleuchte als Standeckleuchte ausgebildet ist und im Eckbereich von aneinander anstoßenden Möbelwänden angeordnet ist und genau diesen Eckbereich durchbricht.

In einer dritten Ausführungsform ist vorgesehen, dass die Leuchte als hängende Wandeckleuchte ausgebildet ist, die ein oder mehrere im Winkel aufeinander treffende horizontale Möbelwände durchbricht und bevorzugt in deren Deckenbereich angeordnet ist.

In einer weiteren Ausführungsform kann es auch vorgesehen sein, dass die hängende Leuchte als Wandleuchte ausgebildet ist, die also aneinander anstoßende Möbelwände im Bereich außerhalb einer Eckverbindung durchbricht und sowohl den vorderen als auch den hinteren Raum beleuchtet.

Wichtig ist bei allen Ausführungsformen, dass wesentlicher Raum eingespart wird, denn durch die Anordnung einer Durchbrechung in der Möbelwand und durch die Anordnung der Leuchte im Bereich dieser Durchbrechung nimmt die Leuchte im wesentlichen keinen mehr über die Möbelwand hinausragenden Raum ein.

Außerdem ergeben sich durch die in die Wandfläche integrierten, mindestens teilweise lichtdurchlässigen Leuchtenabdeckungen neue Möglichkeiten der Raumgestaltung. Beispielsweise kann die Leuchtenabdeckung die Wandfläche etwa bündig fortsetzen, wodurch die Wandfläche durch leuchtende Wandbereiche unterbrochen wird.

In einer anderen Ausgestaltung kann die Leuchtenabdeckung aber auch über die Wandfläche hervorstehen und neuartige Gestaltungsmerkmale bilden, insbesondere dann, wenn die über die Wandfläche vorstehenden Bereiche der Leuchtenabdeckung beispielsweise oval, elyptisch oder mehreckig ausgebildet sind.

Es ist selbstverständlich auch möglich, die Leuchtenabdeckung versenkt in die Wandfläche einzubringen, so dass die Fläche der Leuchtenabdeckung hinter der Fläche der Wand zurückspringt.

Die gleichen Erläuterungen wie vorstehend gegeben gelten selbstverständlich nicht nur für die stehenden Wandleuchten oder Wandeckleuchten, sondern ebenfalls auch für die hängenden Wandleuchten oder Wandeckleuchten.

Die Erfindung wird anhand mehrer Ausführungsbeispiele näher beschrieben.

Hierbei ergeben sich aus den Zeichnungen und deren Beschreibung weitere Vorteile und Merkmale der Erfindung.

Es zeigen:
Figur 1: Schnitt durch eine stehende Wandeckleuchte
Figur 2: Draufsicht auf das Hohlprofil der Wandeckleuchte nach Figur 1
Figur 3: Stirnansicht des Hohlprofils nach Figur 2
Figur 4: Schnitt durch eine hängende Wandeckleuchte
Figur 5: Einbaubeispiel einer Standeckleuchte nach Figur 1
Figur 6: Einbaubeispiel einer hängenden Wandeckleuchte nach Figur 4

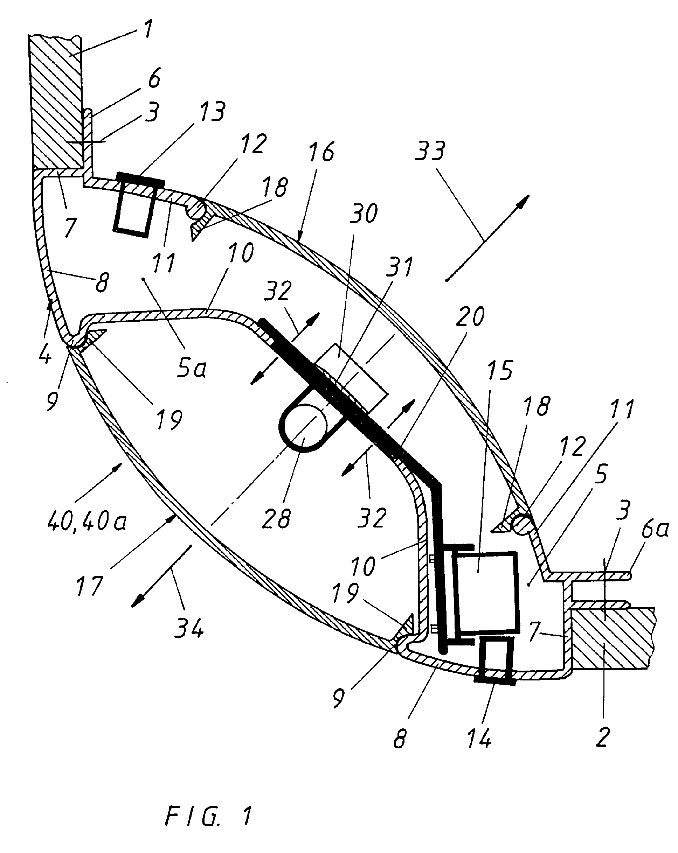

In Figur 1 ist allgemein eine Standeckleuchte (40) dargestellt, die den Eckbereich zweier aufeinander stoßender Möbelwände (1,2) durchbricht.

Nachdem die Möbelwände (1,2) im rechten Winkel aufeinander stoßen bildet also die erfindungsgemäße Standeckleuchte (40) die Möbelecke zwischen den genannten Möbelwänden (1,2).

Wenn hingegen - nicht gezeichnet - die Möbelwände (1,2) fluchtend zueinander angeordnet sind, ist die Standeckleuchte als Standleuchte (40a) (mit genau dem gleichen Aufbau wie die Standeckleuchte (40)) ausgebildet und durchbricht demzufolge nicht eine Möbelecke sondern ist bündig in die fluchtend zueinander angeordneten Möbelwände (1,2) eingesetzt.

Der Einfachheit halber wird deshalb im folgenden lediglich der Aufbau einer Standeckleuchte (40) beschrieben.

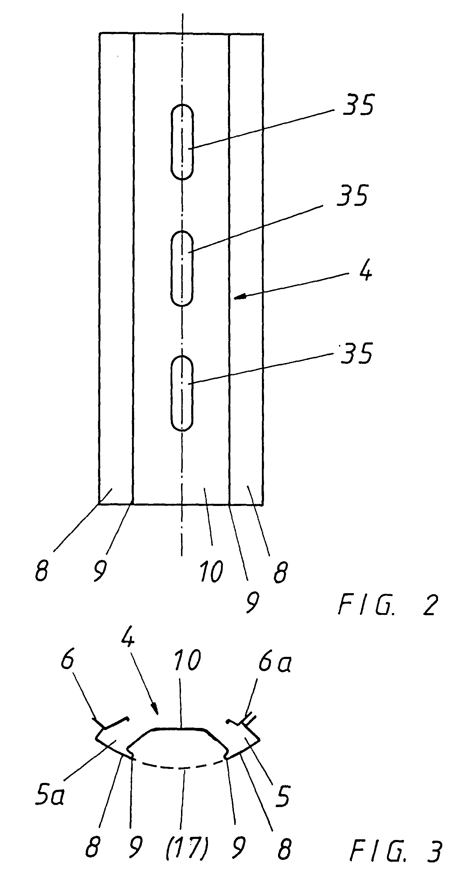

Die Standeckleuchte (40) besteht im wesentlichen aus einem in den Figuren 2 und 3 dargestellten Hohlprofil (4), welches mit Befestigungsmitteln (3) jeweils an der Möbelwand (1,2) befestigt ist. Die Befestigung erfolgt hierbei im Bereich von Ansätzen (6,6a), die an dem Hohlprofil (4) angeformt sind.

Gemäß den Figuren 2 und 3 bildet das Hohlprofil (4) jeweils einander gegenüberliegende und einseitig offene Profilkammern (5,5a), sowie eine die Profilkammern (5,5a) verbindende Verbindungswand (10), die an ihrem jeweils vorderen Ende zwei Abkröpfungen (9) für die Halterung einer dort aufgerasteten Leuchtenabdeckung (17) bildet.

Die eine Leuchtenabdeckung (17) weist hierzu jeweils nach innen weisende, einander gegenüberliegende Ansätze (19) auf, die Aufnahmen ausbilden, welche die jeweilige Abkröpfung (9) übergreifen und dort rastend gehalten sind.

Die gegenüberliegende Leuchtenabdeckung (16) weist gleichartige Ansätze (18) mit eingeformten Aufnahmen auf, die mit den zugeordneten Raststegen (12) verrastbar sind, die an der jeweiligen Vorderseite von Schenkeln (11) des Wohnprofils (4) angeformt sind.

Im Übrigen setzt sich die Verbindungswand (10) jenseits der Abkröpfungen (9) mit Schenkeln (8) fort, die wiederum über im Winkel daran ansetzende Schenkel (7) die jeweiligen Profilkammern (5,5a) bilden.

Im Bereich der Verbindungswand (10) ist hierbei das Leuchtmittel angeordnet, welches im wesentlichen aus einer Fassung (30) für eine langgestreckte Leuchtstoffröhre besteht, in welcher das Leuchtmittel (28) eingesetzt ist.

Wie aus Figur 2 erkennbar, ist die Verbindungswand (10) in den regelmäßigen Abständen durch Ausnehmungen (35) durchbrochen, so dass das vor der Verbindungswand sitzende Leuchtmittel (28) Licht strahlt sowohl nach vorne in Pfeilrichtung (32) als auch nach hinten durch die Verbindungswand (10) abgeben kann.

Damit wird Licht in Pfeilrichtung (34) durch die eine Leuchtenabdeckung (17) und in Pfeilrichtung (33) durch die andere Leuchtenabedeckung (16) abgestrahlt.

Damit die Leuchte von beiden Räumen her betätigt werden kann sind zwei Wechselschalter (13,14) vorgesehen, wobei der eine Wechselschalter (13) von dem einen Raum betätigt wird, während der Wechselschalter (14) von einem anderen Raum betätigt wird.

Es ist ferner noch an einem Halteprofil (20) ein Elektronikgehäuse (15) angeordnet, in dem die elektronischen Schaltmittel für die Ansteuerung des Leuchtmittels (28) vorgesehen sind.

Selbstverständlich können in der Fassung (30) noch ein oder mehrere Reflektoren (31) angeordnet sein.

Es ist auch nicht lösungsnotwendig, dass die eine Leuchtenabdeckung (16) genau wie die andere Leuchtenabdeckung (17) ausgebildet ist. Diese Leuchtenabdeckungen können durchaus unterschiedlich sein und zum Beispiel unterschiedlich geformt oder auch unterschiedlich lichtdurchlässig ausgebildet sein.

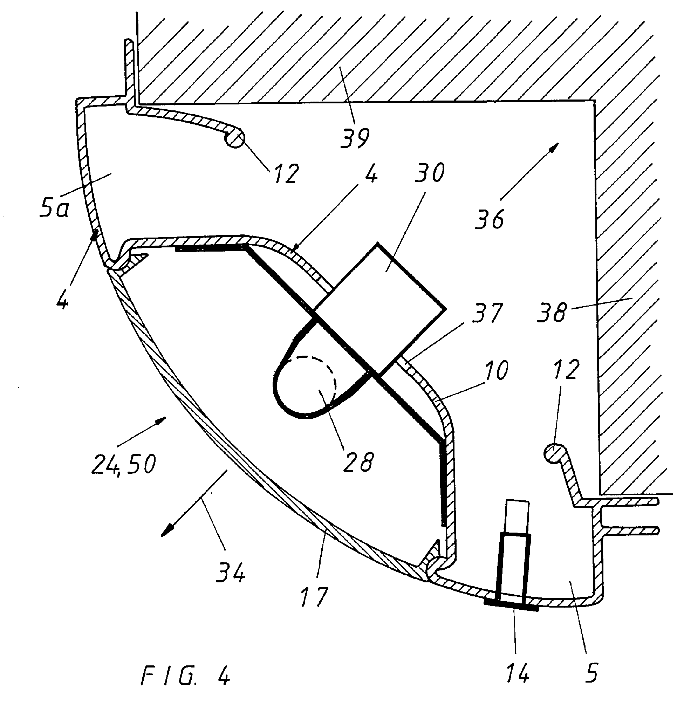

Figur 4 ist als weiteres Ausführungsbeispiel eine hängende Wandeckleuchte (24) vorgesehen, welche im wesentlichen das gleiche Hohlprofil (4) wie die vorher beschriebene Standeckleuchte (40) bzw. Standleuchte (40a) verwendet.

In Abwandlung zu dem Ausführungsbeispiel nach Figur 1 weist die Wandeckleuchte lediglich die eine Leuchtenabdeckung (17) auf, während die Verbindungswand (10) nicht durchbrochen ist und demzufolge an den Raststegen (12) keine weitere Leuchtenabdeckung eingerastet ist.

Nachdem aber die Verbindungswand (10) auch lichtdurchlässige Ausnehmungen (37) aufweist, wird - auch bei Wegfall der inneren Leuchtenabdeckung - die Innenecke (36) hell ausgeleuchtet und im übrigen wird das Licht auch in Pfeilrichtung (34) nach vorne abgestrahlt.

Hierauf ist die beschriebene Wandeckleuchte (24) jedoch nicht beschränkt. Es kann auch neben der Leuchtenabdeckung (17) noch die Leuchtenabdeckung (16) vorhanden sein und an den Raststegen (12) gemäß Figur 1 eingerastet sein, wodurch dann zwei Leuchtenabdeckungen vorhanden sind.

Ebenso muss nicht notwendigerweise eine Innenecke (36) vorhanden sein, sondern die erfindungsgemäße Wandeckleuchte (34) kann beispielsweise auch an oder vor einem Schrank montiert sein und demzufolge den Raum vor dem Schrank beleuchten, als auch den Schrankinnenraum.

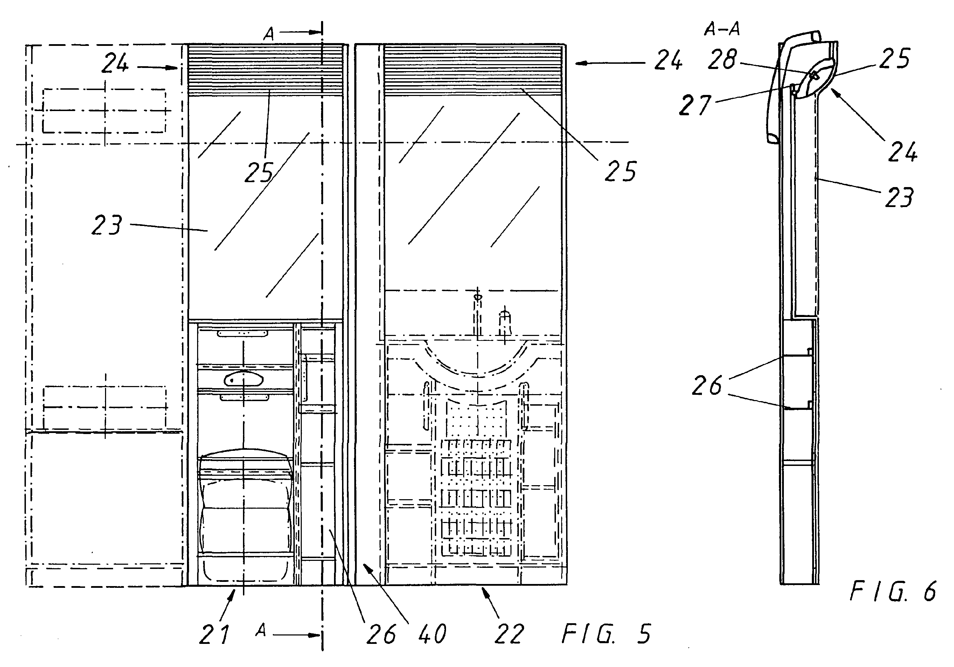

Die Figur 5 zeigt das Ausführungsbeispiel, wie eine derartige Wandeckleuchte (24) mit einer vorderen Leuchtenabdeckung (25) beispielsweise ein Waschabteil (22) beleuchtet, an welches sich ein Küchenabteil (21) anschließt.

Es sind also zwei nebeneinander und etwa fluchtend zueinander angeordnete Wandeckleuchten (24) angeordnet.

Ferner ist dargestellt, dass die Möbelwand zwischen den beiden Abteilen (21,22) durch eine Standeckleuchte (40) durchbrochen ist, die sowohl Licht nach vorne als auch Licht nach hinten abgeben kann.

Die Figur 6 zeigt als Schnitt den Einbau einer Wandeckleuchte in die Frontwand (23) des Küchenabteils (21); wo erkennbar ist, dass oberhalb von Fachschränken (26) im Eckbereich die Wandeckleuchte (24) nach Figur 14 eingesetzt ist und mit einem Halteprofil (27) gehalten ist.

Das verwendete Leuchtmittel (28) leuchtet dann sowohl nach vorne und unten als auch nach hinten und kann beispielsweise den Innenraum eines Küchenschrankes beleuchten.

Die in Figur 4 dargestellte Wandeckleuchte (24) kann aber auch als Wandleuchte ausgebildet sein, für den Fall, dass sie nicht über Eck aneinander stoßende Möbelwände (38,39) ausleuchtet, sondern bündig in den Übergangsbereich zwischen ineinander übergehende Möbelwände (38,39) eingesetzt ist.

In diesem Fall ist die genannte Leuchte als Wandleuchte (50) ausgebildet und hat - nicht gezeigt - neben der vorderen Leuchtenabdeckung (17) auch die hintere Leuchtenabdeckung (16).

Insgesamt kann also festgestellt werden, dass die erfindungsgemäße Ausbildung einer Leuchte sowohl stehende als auch hängende Leuchten betrifft und diese Leuchten entweder im Eckbereich voneinander anstoßenden Möbelflächen als auch im Übergangsbereich von ineinander übergehende Möbelflächen eingebaut werden können.

Zweck aller genannten Leuchten ist es, sowohl vor als auch hinter der genannten Möbelfläche jeweils einen Lichtstrom zu erzeugen.

### Zeichnungslegende

- 1.: Möbelwand
- 2.: Möbelwand
- 3.: Befestigungsmittel
- 4.: Hohlprofil
- 5.: Profilkammer 5a
- 6.: Ansatz 6a
- 7.: Schenkel
- 8.: Schenkel
- 9.: Abkröpfung
- 10.: Verbindungswand
- 11.: Schenkel
- 12.: Raststeg
- 13.: Wechselschalter
- 14.: Wechselschalter
- 15.: Elektronikgehäuse
- 16.: Leuchtenabdeckung (innen)
- 17.: Leuchtenabdeckung (außen)
- 18.: Ansatz
- 19.: Ansatz
- 20.: Halteprofil
- 21.: Küchenabteil
- 22.: Waschabteil
- 23.: Frontwand
- 24.: Wandeckleuchte
- 25.: Leuchtenabdeckung
- 26.: Fachschrank
- 27.: Halteprofil
- 28.: Leuchtmittel
- 29.: Außenecke
- 30.: Fassung
- 31.: Reflektor
- 32.: Doppelpfeil
- 33.: Pfeilrichtung
- 34.: Pfeilrichtung
- 35.: Ausnehmung
- 36.: Innenecke
- 37.: Ausnehmung
- 38.: Möbelwand
- 39.: Möbelwand
- 40.: Standeckleuchte
- 40a: Standleuchte
- 50: Wandleuchte

## Patentansprüche

1. Leuchte für ein Land-, Wasser- oder Luftfahrzeug, insbesondere ein Wohnmobil mit einem langgestreckten Leuchtengehäuse, einem darin angeordneten Leuchtmittel und mindestens einer teilweise lichtdurchlässigen Leuchtenabdeckung, **dadurch gekennzeichnet, dass**
die Leuchte als stehende Standleuchte (40a) ausgebildet ist, welche mindestens eine Möbelwand (1 oder 2) in vertikaler Richtung durchbricht und sowohl an der Vorderseite als auch an der Rückseite die teilweise lichtdurchlässige Leuchtenabdeckung (16,17) trägt.

2. Leuchte für ein Land-, Wasser- oder Luftfahrzeug, insbesondere ein Wohnmobil mit einem langgestreckten Leuchtengehäuse, einem darin angeordneten Leuchtmittel und mindestens einer teilweise lichtdurchlässigen Leuchtenabdeckung, **dadurch gekennzeichnet, dass**
die Leuchte als stehende Standeckleuchte (40) ausgebildet ist, welche zwei im Winkel aufeinandertreffende Möbelwände (1,2) in deren Eckbereich in vertikaler Richtung durchbricht und sowohl an der Vorderseite als auch an der Rückseite eine mindestens teilweise lichtdurchlässige Leuchtenabdeckung (16,17) trägt.

3. Leuchte für ein Land-, Wasser- oder Luftfahrzeug, insbesondere ein Wohnmobil mit einem langgestreckten Leuchtengehäuse, einem darin angeordneten Leuchtmittel und mindestens einer teilweise lichtdurchlässigen Leuchtenabdeckung, **dadurch gekennzeichnet, dass**
die Leuchte als hängende Wanddeckleuchte (50) ausgebildet ist, welche eine oder mehrere im Winkel aufeinander treffende horizontale Möbelwände (38,39) durchbricht und mindestens an einer Seite eine mindestens teilweise lichtdurchlässige Leuchtenabdeckung (17) trägt.

4. Leuchte nach einem der Ansprüche 1-3, **dadurch gekennzeichnet, dass** ein Kunststoff- oder Leichtmetall-Hohlprofil (4) aus zwei gegeneinander gerichteten und zueinander offenen Profilkammern (5,5a) besteht und dass lediglich eine mittlere, die beiden Profilkammern (5,5a) verbindende Verbindungswand (10) den Leuchtkörper (28) trägt.

5. Leuchte nach einem der Ansprüche 1-4, **dadurch gekennzeichnet, dass** auch die Verbindungswand (10) mindestens im Bereich des Leuchtkörpers (28) teilweise lichtdurchlässig ist.

6. Leuchte nach Anspruch 5, **dadurch gekennzeichnet, dass** die teilweise Lichtdurchlässigkeit der Verbindungswand durch die Verbindungswand (10) durchsetzende Ausnehmungen (37) bewirkt ist.

7. Leuchte nach einem der Ansprüche 1-6, **dadurch gekennzeichnet, dass** bei Vorhandensein einer vorder- und rückseitigen Leuchtenabdeckung (16,17) an jeder Seite der Leuchte (24,50) ein das Leuchtmittel (28) schaltender Schalter (13,14) vorgesehen ist.
